# EUROPÄISCHE PATENTANMELDUNG

(11) **EP 2 421 106 A2**
(43) Veröffentlichungstag der Anmeldung: **22.02.2012**
(21) Anmeldenummer: 11006425.0
(22) Anmeldetag: 04.08.2011
(51) Int. Cl.: H02G 3/08, H02G 3/16

(54) **Anschlussdose mit Distanzstück**

(30) Priorität: 17.08.2010 DE 102010034631
(71) Anmelder: Lumberg Connect GmbH, 58579 Schalksmühle (DE)
(72) Erfinder: Richter, Michael, 58579 Schalksmühle (DE); Gazke, Dennis, 58507 Lüdenscheid (DE)
(74) Vertreter: Ostriga, Sonnet, Wirths & Roche

(57) **Zusammenfassung**

Die Erfindung betrifft eine Anschlussdose, insbesondere für eine Solarmodul, mit einem Gehäuse, innerhalb dessen Funktionsbauteile zum Anschluss an solarmodulseitige Anschlusskontakte angeordnet sind, wobei das Gehäuse der Anschlussdose ein Distanzstück trägt, vermittels dessen eine weitere Anschlussdose mit Abstand zur das Distanzstück tragenden Anschlussdose anordenbar und lagestabil festlegbar ist.

## Beschreibung

Die Erfindung betrifft eine Anschlussdose, insbesondere für ein Solarmodul, mit einem Gehäuse, innerhalb dessen Funktionsbauteile zum Anschluss an solarmodulseitige Anschlusskontakte angeordnet sind.

Eine gattungsgemäße Anschlussdose ist in der DE 10 2007 027 861 A1 offenbart. Die dortige Anschlussdose ist herstellerseitig vorkonfektioniert, um im automatisierten Produktionsprozess von Solarmodulen auf selbigen montiert zu werden. Das Anschlussdosengehäuse ist mit Anschlussleitungen zur Abfuhr vom Solarmodul erzeugter Elektrizität versehen, welche von einem Kabelhalter getragen sind. Der Kabelhalter dient darüber hinaus der Lagerung des Anschlussdosen-Deckels, mit welchem die Anschlussdose nach Montage auf dem Solarmodule verschließbar ist.

Der in DE 10 2007 027 861 A1 offenbarte Kabelhalter verfügt über einen sogenannten Aufnahmezapfen, der als Angriffspunkt für den Greifer eines Montageroboters dient. Diese fasst gemäß der Offenbarung vorgenannter Druckschrift die Anschlussdose an ihren Außenseiten sowie den Kabelträger an seinem Aufnahmezapfen, um das sogenannte Anschlussset mit einem Klebemittel zur Befestigung auf dem Solarmodul zu versehen.

Den Figuren der DE 10 2007 027 861 A1 ist zu entnehmen, dass der Aufnahmezapfen auch zur Anordnung mehrerer Kabelträger übereinander dient.

Wie die DE 10 2007 027 861 A1 anklingen lässt, sind für die vollautomatische Herstellung von Solarmodulen vorkonfektionierte Anschlussdosen notwendig, die entsprechend den Erfordernissen für eine vollautomatische Produktion bereit gestellt werden müssen. Hierzu werden die Anschlussdosen gestapelt in Magazinen am Fertigungsband zur Entnahme durch einen Fertigungsroboter abgestellt. Eine möglichst definierte Anordnung der einzelnen gestapelten Anschlussdosen innerhalb des Magazins ist erforderlich, da die Montageautomaten ihre Greiforgane nur innerhalb eines gewissen Raumes an eine abweichende Lage der Anschlussdose anpassen können. In aller Regel wird die korrekte Lage durch entsprechende Magazingestelle gewährleistet. Alternativ ist es denkbar, dass die Anschlussdosen auf bestimmten Trägermaterialien in definierten Abständen aufgebracht werden. Solche Trägermaterialien werden dann entsprechend den Abständen der Anschlussdosen zueinander getaktet dem Fertigungsautomaten zugeführt.

Insbesondere die aus dem Stand der Technik bekannten Magazingestelle zur lagestabilen Stapelung vorkonfektionierter Anschlussdosen haben sich als nicht unproblematisch erwiesen. In der Regel haben die Gestelle eine nicht unbeträchtliche Höhe, sind aufgrund der Abmessungen der Anschlussdosen jedoch vergleichweise schmal, so dass das Greiforgan zur Entnahme von Anschlussdosen in einen vergleichsweise engen und hohen Schacht einfahren muss, was gewisse Anforderungen an die Steuerung stellt. Zugleich muss das Magazingestell exakt positioniert sein, um eine Kollision mit dem Greiforgan während der Entnahme von Anschlussdosen zu vermeiden.

Aufgabe der Erfindung ist es, eine neue Anschlussdose zu schaffen, welche vorteilhaft an Fertigungsstraßen für Solarmodule bevorratet werden kann.

Gelöst wird die Aufgabe von einer Anschlussdose mit den Merkmalen des Anspruchs 1, insbesondere mit den Merkmale des Kennzeichenteils, wonach das Gehäuse der Anschlussdose ein Distanzstück trägt, vermittels dessen eine weitere Anschlussdose mit Abstand zur das Distanzstück tragenden Anschlussdose anordenbar und lagestabil festlegbar ist.

Die erfindungsgemäße Anschlussdose erlaubt es aufgrund des Einsatzes von wenigstens einem, bevorzugt jedoch drei Distanzstücken, Anschlussdosen aufeinander anzuordnen und so Vorratsstapel zu bilden. Die Distanzstücke dienen zudem dazu, die Anschlussdosen aneinander lagestabil festzulegen. Infolgedessen wird ein Gestell, welches eine Relativverschiebung der Anschlussdosen zueinander verhindert, nicht weiter benötigt. Der Anschlussdosenstapel ist in sich stabil.

Bei einer vorgesehenen Ausführungsform ist daran gedacht, dass die Anschlussdose drei Distanzstücke trägt, die die Eckpunkte eines Dreiecks bilden.

Die Anordnung der Distanzstücke als Ecken eines Dreiecks gewährleistet eine sehr stabile Anordnung der Anschlussdosen aufeinander.

Für die Fertigung und den Einsatz des späteren Solarmoduls ist es von Vorteil, wenn das Distanzstück lösbar in einer der Halterungen der Anschlussdose gehalten ist.

Diese Ausführungsform erlaubt es, vor oder nach Montage der Anschlussdose auf dem Solarmodul das Distanzstück zu entfernen. Da die Distanzstücke zur Gewährleistung eines Abstandes der Anschlussdosen zueinander länger sind als die Anschlussdose hoch ist, lässt sich durch Entfernen der Distanzstücke die Gesamtbau- bzw. Transporthöhe eines Solarmoduls verringern.

Von Vorteil ist, wenn das Distanzstück reibschlüssig in der Halterung angeordnet ist.

Es ist jedoch auch denkbar, dass die Distanzstücke über Materialschwächungszonen an der Anschlussdose angesetzt sind und das Entfernen des Distanzstückes von der Anschlussdose durch eine Trennung entlang der Materialschwächungszone durch ein Werkzeug oder durch Überlast möglich ist. Bevorzugt ist jedoch eine reibschlüssige Halterung des Distanzstückes, da sich ein solches Distanzstück besonders einfach, beispielsweise durch Herausschieben aus der Halterung, entfernen lässt.

Es ist ferner vorgesehen, dass die Halterung der Anschlussdose oder die Basis des Distanzstücks mit Rippen versehen sind, die den Reibschluss zwischen Halterung und Distanzstück herstellen. Durch die Wahl der Anzahl der Rippen lässt sich sehr leicht die zur Halterung gewünschte Reibkraft beeinflussen.

Für die Anordnung mehrerer Anschlussdosen übereinander durch Kopplung der Distanzstücke unterschiedlicher Anschlussdosen untereinander ist vorgesehen, dass der Kopf des weiteren Distanzstücks reibschlüssig in der Aufnahme der Basis gehalten ist.

Auch für diese Kopplung ist aufgrund der Vorzüge vorgesehen, dass Kopf oder Aufnahme mit Rippen zur Herstellung des Reibschlusses versehen sind.

Eine besonders bevorzugte Ausführungsform kennzeichnet sich dadurch, dass die Anzahl der Rippen der Aufnahme des Distanzstücks bzw. des Kopfes des Distanzstücks geringer ist als die Anzahl der Rippen der Halterung der Anschlussdose bzw. der Basis des Distanzstücks.

Durch die geringere Anzahl von Rippen zwischen Aufnahme und Kopf gegenüber der Anzahl der Rippen von Halterung und Basis ist gewährleistet, dass die Reibkräfte zwischen Halterung und Basis größer sind als die Reibkräfte zwischen Aufnahme und Kopf zweier Distanzstücke.

Berücksichtigt man, dass die Anschlussdosen im Stapel angeordnet sind, in dem der Kopf des Distanzstückes der ersten Anschlussdose in der Aufnahme des Distanzstückes einer zweiten Anschlussdose einliegt, ist durch den unterschiedlich starken Reibschluss gewährleistet, dass sich grundsätzlich bei der Entnahme einer Anschlussdose vom Stapel nur Kopf und Aufnahme voneinander trennen, nicht aber Halterung und Basis. Insofern verbleibt jedes Distanzstück bei Entnahme der Anschlussdose an der zugehörigen Anschlussdose selbst angeordnet und wird frühestens nach der Entnahme und vor der Montage der zugehörigen Anschlussdose auf den Solarmodul entfernt.

Die Distanzstücke selbst können zur Wiederverwertung gesammelt und rückgeführt werden.

Im Folgenden wird die Erfindung anhand eines Ausführungsbeispiels erläutert. Es zeigen:

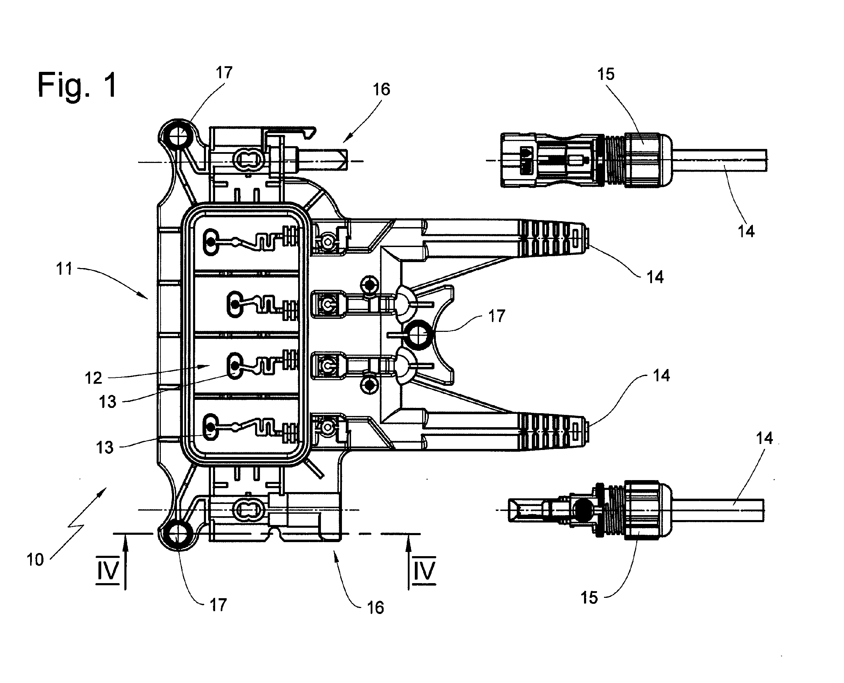

- Fig. 1: die erfindungsgemäße Anschlussdose in Aufsicht,
- Fig. 2: die Anschlussdose gemäß Fig. 1 in perspektivischer Ansicht,
- Fig. 3: zwei hintereinander gesetzte Anschlussdosen gemäß Fig. 1 in perspektivischer Ansicht,
- Fig. 4: eine teilweise geschnittene Darstellung zweier übereinander angeordneter Anschlussdosen gemäß Schnittlinie IV - IV in Fig. 1,
- Fig. 5: ein erfindungsgemäßes Distanzstück in Seitenansicht,
- Fig. 6: eine Schnittdarstellung des Distanzstückes gemäß Schnittlinie VI - VI in Fig. 5,
- Fig.7: eine perspektivische Darstellung des Distanzstückes gemäß Fig. 5,
- Fig. 8: eine Teildarstellung der Anschlussdose gemäß Fig. 1 in Ansicht auf eine Halteeinrichtung für ein Distanzstück,
- Fig. 9: eine Teildarstellung der Anschlussdose gemäß Fig. 1 mit Ansicht auf eine Halteeinrichtung gemäß Fig. 8 mit eingesetztem Distanzstück,
- Fig. 10: einen Horizontalschnitt durch die mit Distanzstück versehene Halteeinrichtung der Anschlussdose entsprechend Fig. 9,
- Fig. 11: einen Horizontalschnitt durch die Basis des Distanzstücks mit eingesetztem Kopf eines weiteren Distanzstücks.

In den Figuren ist eine erfindungsgemäße Anschlussdose für Solarmodule insgesamt mit der Bezugsziffer 10 versehen.

Die Anschlussdose 10 umfasst zunächst ein Gehäuse 11, welches einen Innenraum 12 ausbildet.

Innerhalb des Innenraums 12 sind Anschlusskontakte 13 angeordnet, welche zur Anbindung an nicht dargestellte Solarmodul-Kontakte vorgesehen sind.

Die Anschlusskontakte 13 sind über im Gehäusematerial eingebettete Funktionsbauteile, wie Bypassdioden mit das Gehäuse 11 verlassenden Anschlussleitungen 14 elektrisch verbunden, deren Enden mit Steckverbindern 15 versehen sind.

Die hier dargestellte Unterbrechung der Anschlussleitungen 14 zwischen ihrem Austritt aus der Anschlussdose 10 und dem mit Steckverbindern 15 versehen Ende ist darstellungsbedingt. Tatsächlich handelt es sich jeweils um zwei vom Gehäuse 11 bis zum Steckverbinder 15 durchgehende Anschlussleitungen 14.

Beidseitig des Innenraums 12 bildet das Gehäuse 11 der Anschlussdose 10 zu den Steckverbindern 15 steckkomplementäre Mimiken 16 aus, die der Halterung der Steckverbinder 15 an der Anschlussdose 10 für Transport und Montage dienen. Insofern dienen die Mimiken 16 als Kabelträger

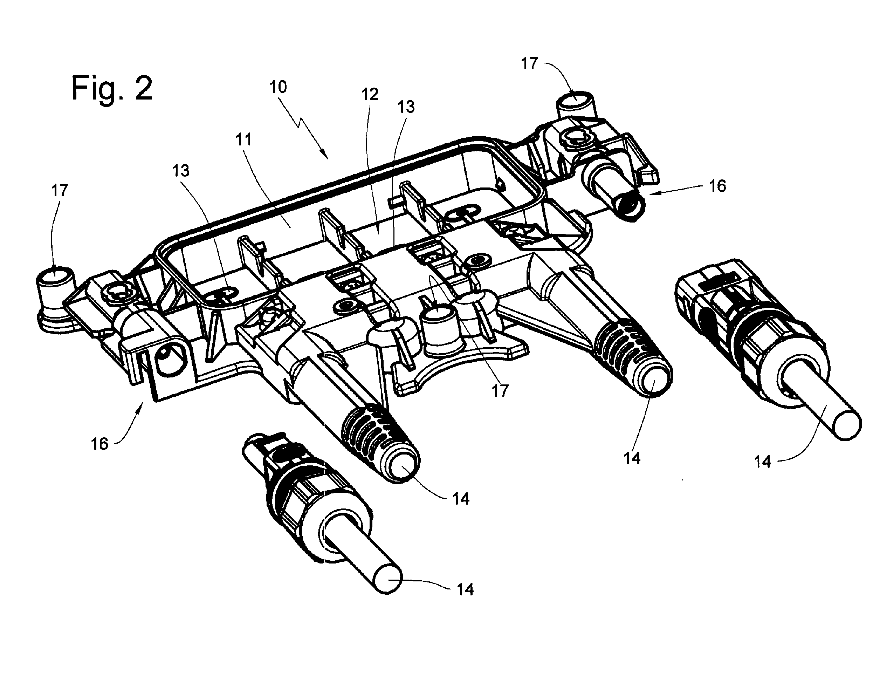

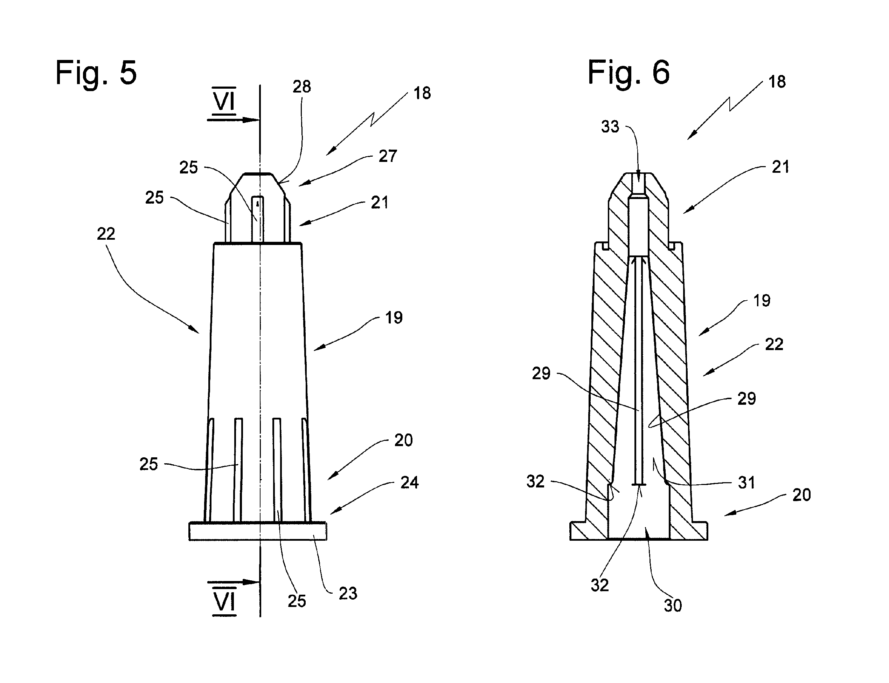

Zusätzlich bildet das Gehäuse 11 der Anschlussdose 10 Halterungen 17 aus, die der Aufnahme von Distanzstücken 18 (siehe beispielsweise Fig. 5) dienen. Die Halterung 17 ist vorliegend als Hohlzylinder, insbesondere als kreiszylindrischer Hohlzylinder, ausgebildet, wie dies beispielsweise aus Fig. 2 ersichtlich ist.

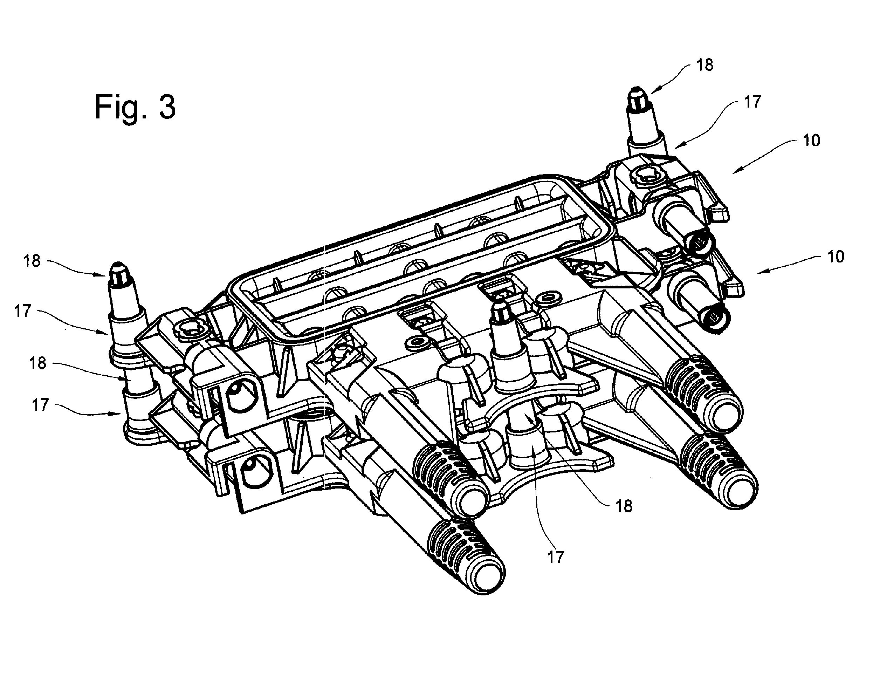

Fig. 3 zeigt eine Anordnung von zwei Anschlussdosen 10 übereinander. Hierzu sind Distanzstücke 18 in die Halterungen 17 bei jeder Anschlussdose 10 eingesetzt. Im konkreten Ausführungsbeispiel bildet jede Anschlussdose 10 drei Halterungen 17 aus, die jeweils ein Distanzstück 18 aufnehmen.

Das Distanzstück 18 ist im Detail in den Figuren 5 bis 7 dargestellt. Es umfasst einen im Wesentlichen zylindrischen Körper, der insgesamt mit der Bezugsziffer 19 versehen ist.

Der kreiszylindrische Körper 19 weist eine leichte Konizität auf, so dass man ihn auch als Kegelstumpf bezeichnen könnte.

Der Körper 19 teilt sich in drei Bereiche. Sein unterer Abschnitt wird durch die sogenannte Basis 20 gebildet. Am gegenüberliegenden Ende befindet sich der Kopf 21 des Körpers 19. Zwischen Basis 20 und Kopf 21, die an gegenüberliegenden Enden des Körpers 19 ausgebildet sind, ist ein Abstandsstück 22 ausgebildet.

Die Basis 20 umfasst in etwa den Teil des Körpers 19, welcher in der Halterung 17 einer Anschlussdose 10 einsitzt. Sie umfasst eine den Boden des Körpers 19 bildende, im Durchmesser gegenüber dem Körper 19 erweiterte Bodenscheibe 23, die über eine Stufe 24 in Form eines Rücksprungs in den Körper 19 übergeht. Der sich an die Bodenscheibe 23 anschließende Teil des zylindrischen Körpers 19 ist, soweit er zur Basis 20 gehört, mit in Umfangsrichtung zueinander beabstandeten und zur Längsachse des Distanzstücks 18 parallelen Rippen 25 versehen.

Der Übergang vom Abstandsstück 22 des Körpers 19 zum Kopf 21 wird durch einen Absatz 26 gebildet. Dieser Absatz 26 wird gebildet, indem der Kopf 21 des Distanzstückes 18 gegenüber dem Abstandsstück 22 durchmesserverringert ist.

Der Kopf 21 ist ebenfalls mit Rippen 25 versehen. Auch diese sind in Umfangsrichtung voneinander beabstandet und parallel zur Längsachse des Distanzstückes 18 gerichtet. Gegenüber der Anzahl an Rippen 25, die die Basis 20 trägt, ist die Anzahl der Rippen 25, die der Kopf 21 trägt, geringer. Der Kopf 21 weist darüber hinaus einen am oberen Ende des Distanzstückes 18 angeordneten Führungsabschnitt 27 aus, der mit einer konischen Umfangsfläche 28 versehen ist.

Fig. 6 zeigt einen Längsschnitt durch das Distanzstück 18 gemäß Schnittlinie VI - VI in Fig. 5.

Wie aus Fig. 6 ersichtlich ist, ist das Distanzstück 18 innen hohl und weist zunächst eine in die Basis 20 eingebrachte und zum Boden des Distanzstückes hin offene Aufnahme 30 auf.

Zwischen der Aufnahme 30 und dem Kopf 21 sind im Innenraum des Distanzstückes 18 Stabilisierungswände 29 an die Innenumfangsfläche 31 angeformt. Deren zur Bodenscheibe 23 parallelen Wandflächen 32 begrenzen die Aufnahme 30 in Richtung Kopf 21 des Distanzstücks 18.

Die Aufnahme 30 dient zum Einsetzen des Kopfes 21 eines weiteren Distanzstückes 18. Sie ist demzufolge zum Kopf 21 des weiteren Distanzstückes 18 aufnahmekomplementär ausgebildet. Die Wandflächen 32 bilden einen Endanschlag für die Einschubbewegung des Kopfes 21 eines weiteren Distanzstückes 18. Die konischen Umfangsflächen 28 des Kopfes 21 dienen zur Erleichterung des Einsetzens in eine Aufnahme 30.

Wie aus Fig. 6 schließlich auch ersichtlich ist, ist der Kopf 21 des Distanzstückes 18 mit einer Längsbohrung 33 versehen, die bis in den Innenraum des Distanzstückes 18 reicht.

Die Bohrung 33 im Kopf 21 des Distanzstückes 18 gewährleistet einen Druckausgleich, wenn in die Aufnahme 30 der Kopf 21 eines weiteren Distanzstückes 18 eintaucht. Die durch die Volumenverringerung des Hohlraums des Distanzstückes 18 verdrängte Luft kann durch die Bohrung 33 entweichen.

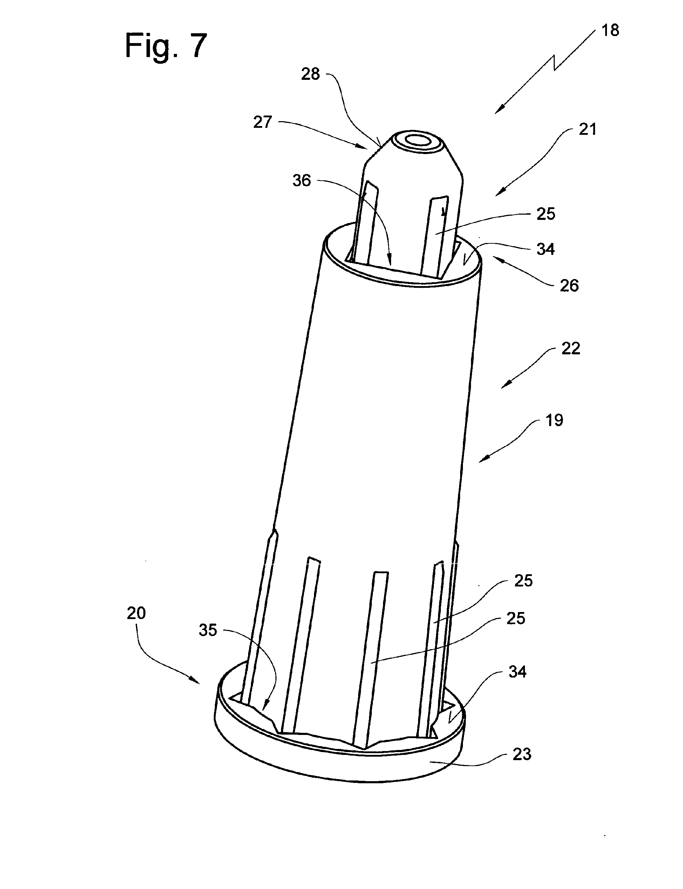

Fig. 7 zeigt das Distanzstück 18 noch einmal in perspektivischer Ansicht. Augenfällig ist insbesondere, dass in die Anschlagflächen 34 der Bodenscheibe 23 und des Absatzes 26 jeweils eine Nut eingebracht ist. Die Nut 35 der Bodenscheibe 23 ist in etwa sternförmig, die Nut des Absatzes 26 in etwa quadratisch. Die Nuten 35 und 36 dienen der Aufnahme von sich eventuell beim Einsetzen des Distanzstückes 18 in eine anschlussdosenseitige Halterung 17 oder beim Einsetzen des Kopfes 21 in eine Aufnahme 30 des Distanzstückes 18 von den Rippen 25 lösenden Spanes, worauf im Folgenden noch einmal kurz eingegangen wird.

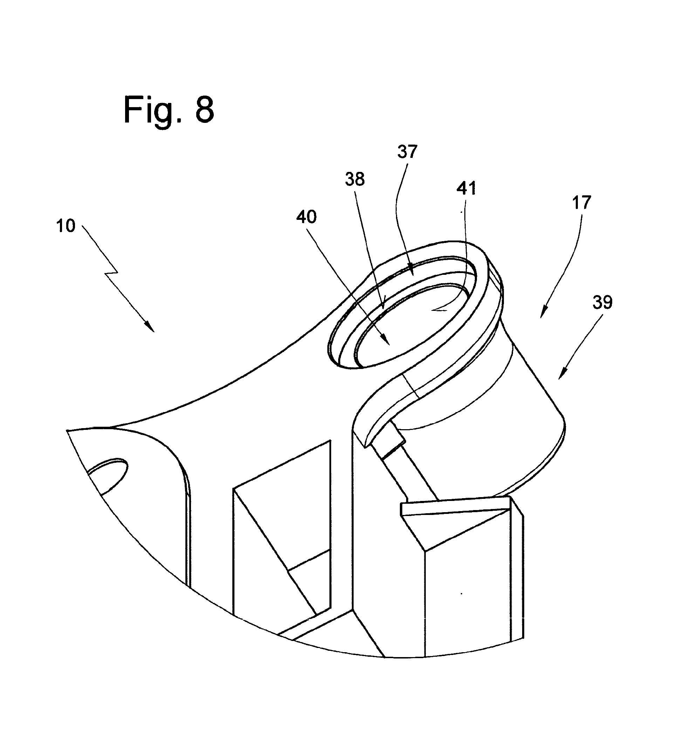

In Fig. 8 ist die Anschlussdose 10 in Teilansicht dargestellt. Es handelt sich um eine Ausschnittsvergrößerung mit Ansicht von unten auf die Halterung 17 der Anschlussdose 10.

Die Halterung 17 ist im Wesentlichen als Hohlzylinder ausgebildet, die im Wesentlichen formkomplementär zur Basis 20 des Distanzstücks 18 ausgebildet ist. So weist die Halterung 17 zunächst eine Bohrung 37 größeren Durchmessers auf, die bei eingesetztem Distanzstück 18 die Bodenscheibe 23 der Basis 20 aufnimmt. Die Anschlagfläche 34 liegt bei eingesetztem Distanzstück 18 an der Ringfläche 38 der Halterung 17 an. Die Ringfläche 38 dient insofern der Begrenzung des Einschubweges des Distanzstückes 18 in die Halterung 17.

An die Bohrung 37 größeren Durchmessers schließt sich der dem gegenüber im Durchmesser kleinere hohlzylindrische Abschnitt 39 der Halterung 17 an, dessen Hohlraum 40 im konkreten Ausführungsbeispiel entsprechend der Konizität des Distanzstückes 18 komplementär konisch geformt ist. Wesentlich ist jedoch, dass die Innenoberfläche 41 des hohlzylindrischen Abschnitts 39 der Halterung 17 im Wesentlichen eben ist und insbesondere keine zu den Rippen 25 komplementären Ausnehmungen zur Rippenaufnahme aufweist. Der Hohlraum 40 der Halterung 17 ist also nur insofern formkomplementär zur Basis 20 des Distanzstückes 18, als er eine rippenfreie Basis unter lediglich der Einhaltung eines gewissen Passungsspiels 42 aufnehmen würde.

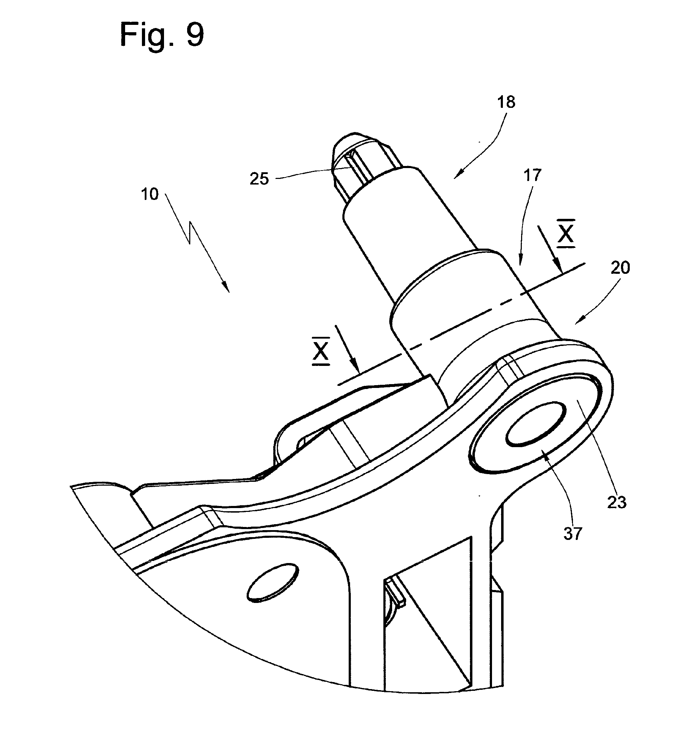

Fig. 9 entspricht im Wesentlichen der Ansicht der Fig. 8, nur dass in die Halterung 17 nunmehr ein Distanzstück 18 eingesetzt ist. Wie diese Ansicht zeigt, ist die Bodenscheibe 23 vollständig in der Bohrung 37 größeren Durchmessers der Halterung 17 aufgenommen.

Das Distanzstück 18 ist reibschlüssig in der Halterung 17 festgelegt, wobei der Reibschluss durch die Rippen 25 der Basis 20 hergestellt wird. Da die Rippen den Außenumfang der Basis 20 erweitern, die Aufnahme 17 jedoch keinen Ausweichraum für die Rippen 25 zur Verfügung stellt, wird durch Einsetzen der Distanzstücke 18 und den durch die Rippen 25 hervorgerufenen Reibschluss eine Art Presssitz hergestellt.

Beim Einsetzen des Distanzstückes 18 in die Halterung 17 kann es vorkommen, dass sich die Rippen 25 nicht in der vorgesehenen Weise plastisch verformen, sondern es zu einem spanartigen Materialabtrag kommt. Um dennoch einen passgenauen Sitz der Bodenscheibe 23 in der Bohrung größeren Durchmessers 37 zu gewährleisten, also eine möglichst vollflächige Anlage der Anschlagfläche 34 der Bodenscheibe 23 an der Ringfläche 38 zu erreichen, sind die in Fig. 7 dargestellten sternförmigen Nuten 35 vorgesehen. Sofern es zu einem spanartigen Materialabtrag kommt, wird der Span von der Nut aufgenommen, anstelle sich zwischen der Anschlagfläche 34 und Ringfläche 38 zu legen.

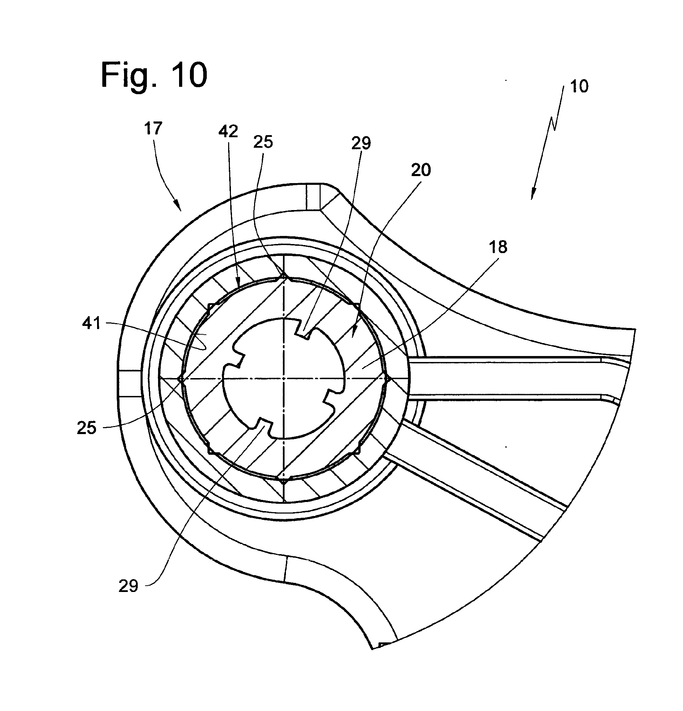

In Fig. 10 ist ein Schnitt durch die Halterung 17 entsprechend der Schnittlinie X - X in Fig. 9 horizontal durch die Basis 20 des Distanzstückes 18 gelegt. Zunächst sei hier auf das Passungsspiel 42 zwischen der Basis 20 und der Innenoberfläche 41 der Halterung 17 hingewiesen. Gut zu erkennen sind auch die Rippen 25, welche umfangsbeabstandet auf der Außenoberfläche der Basis 20 angeordnet sind.

In der Fig. 10 sind die Rippen 25 darstellungstechnisch überzeichnet. Es hat den Anschein, dass die Rippen 25 in die Innenoberfläche 41 der Halterung 17 deutlich stark eingreifen.

Es ist nicht auszuschließen, dass neben einer plastischen Verformung der Rippen 25 auch eine Verformung auf Seiten der Innenoberfläche 41 der

Halterung 17 durch den Einsatz des Distanzstückes 18 erfolgt. Es sei jedoch darauf hingewiesen, dass sich vornehmlich die Rippen 25 verformen werden. Die hier gewählte Überzeichnung der Rippen 25 dient lediglich einer besseren Darstellung selbiger in der Fig. 10.

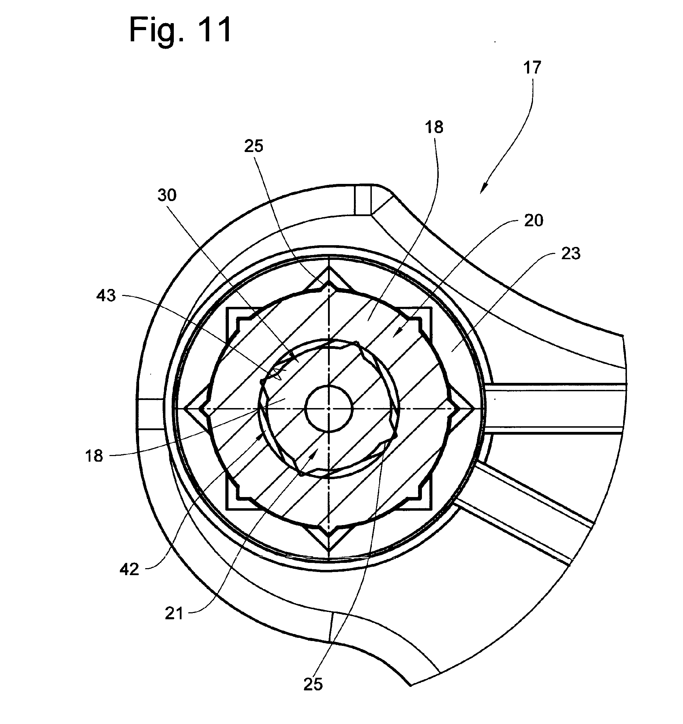

Fig. 11 zeigt ebenfalls einen Horizontalschnitt durch die Halterung 17 der Anschlussdose 10. Die Schnittebene liegt im Bereich der gegenseitigen Anlage von Ringfläche 38 und Anschlagfläche 34 der Bodenscheibe 23. In dieser Darstellung ist gezeigt, wie ein Kopf 21 eines weiteren Distanzstückes 18 in der Aufnahme 30 der Basis 20 eines ersten Distanzstückes 18 angeordnet ist. Auch hier besteht zwischen der rippenlosen Außenumfangsfläche des Kopfes 21 und der Aufnahme 30 ein Passungsspiel 42. Lediglich durch die Rippen 25 wird ein reibschlüssiger Kontakt zwischen der Innenoberfläche 43 der Aufnahme 30 und dem Kopf 21 hergestellt. Infolgedessen ist der Kopf 21 reibschlüssig in Form eines Presssitzes in der Aufnahme 30 gehalten. Auch hier sind die Rippen wie in Fig. 10 darstellungstechnisch überzeichnet. Die vorerwähnte quadratische Nut 36 dient auch hier der Aufnahme eventuell anfallender Späne beim Einsatz des Kopfes 21 in die Aufnahme 30.

Augenfällig in Fig. 11 ist, dass die Anzahl der Rippen 25 an einem Kopf 21 kleiner ist als die Anzahl der Rippen 25 an einer Basis 20. Im vorliegenden Beispiel der Fig. 11 wurde ein Verhältnis von etwa 2:1 gewählt. Bei gleicher Materialbeschaffenheit von Distanzstück 18 und Halterung 17 und gleicher Dimensionierung der Rippen 25 an einem Kopf 21 und der Rippen 25 an einer Basis 20 wird sich auch zwischen den Kräften, die zum Lösen der Abschlussverbinder zwischen Halterung 17 und Basis 20 bzw. zwischen Aufnahme 30 und Kopf 21 besteht, ein Verhältnis von etwa 2:1 bilden.

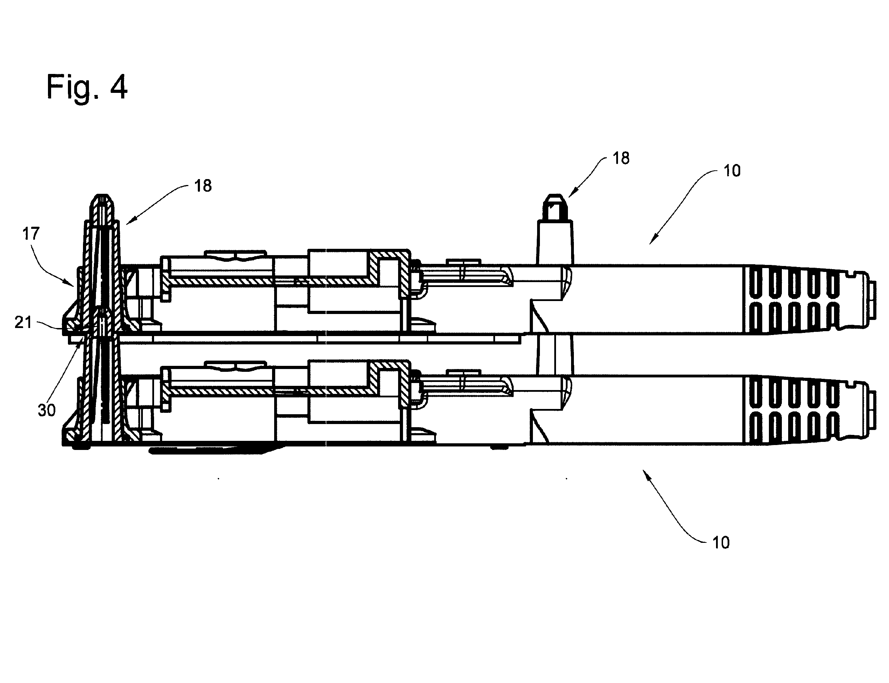

Bei einer Anordnung von Anschlussdosen 10 übereinander unter Nutzung der Distanzstücke 18, wie es in den Figuren 3 und 4 dargestellt ist, lässt sich durch die vorbeschriebenen und allein über die Rippen 25 definierten Reibschlusskraftverhältnisse sicherstellen, dass sich bei Entnahme der oberen Anschlussdose 10 vom Anschlussdosenstapel ausschließlich die Verbindung zwischen Aufnahme 30 und Kopf 21 löst. So ist sichergestellt, dass die Distanzstücke 18 einer jeden Anschlussdose 10 in der jeweiligen Halterung 17 verbleiben. In einem weiteren Arbeitsschritt kann dann das Distanzstück 18 aus der Halterung 17 herausgeschoben werden. Die Anschlussdose 10 ist dann ohne Distanzstück 18 auf einem solaren Modul montierbar.

Aus Fig. 4 ist darüber hinaus das Stapelsystem der Anschlussdosen 10 sehr gut erkennbar. Wie aus dem Vertikalschnitt durch die Distanzstücke 18 in Fig. 4 hervorgeht, greift jeweils der Kopf 21 eines ersten Distanzstückes 18 in die Aufnahme 30 eines weiteren Distanzstückes ein, so dass die Gewichtskraft der jeweils nächst höheren Anschlussdose über die Distanzstücke 18 abgeleitet wird.

Die Anschlussdosen 10 werden folglich durch Anordnung der Distanzstücke 18 aufeinander unter Einhaltung eines Abstandes aufgestapelt und sind relativ zueinander lagestabil angeordnet.

Zusammenfassend wurde eine neue Anschlussdose 10 mit Distanzstücken 18 zur Anordnung mehrerer Anschlussdosen 10 übereinander dargestellt, welche den Anforderungen an vollautomatische Herstellungsprozesse von Solarmodulen in vorteilhafter Weise gerecht wird.

Es wird weiterhin offenbart ein
A) Distanzstück 18 für eine Anschlussdose 10 gemäß Oberbegriff des Anspruchs 1, dadurch gekennzeichnet, dass das Distanzstück 18 lösbar an der Anschlussdose 10 angeordnet ist.
B) Distanzstück nach A), dadurch gekennzeichnet, dass das Distanzstück 18 an gegenüberliegenden Enden einen Kopf 21 und eine Basis 20 ausbildet, wobei die Basis 20 eine Aufnahme 30 zur Anordnung des Kopfes 21 eines weiteren, zumindest hinsichtlich seines Kopfes 21 aufnahmekomplementär ausgebildeten Distanzstücks 18 aufweist.
C) Distanzstück nach B), dadurch gekennzeichnet, dass das Distanzstück 18 Rippen 25 an seiner Basis 20 zur reibschlüssigen Anordnung an der Anschlussdose 10 ausbildet und mit weiteren Rippen 25 an der Aufnahme 30 der Basis 20 versehen ist, die der reibschlüssigen Halterung eines weiteren, zumindest hinsichtlich seines Kopfes 21 aufnahmekomplementär ausgebildeten Distanzstücks dienen, oder das der Kopf 21 des weiteren Distanzstücks 18 mit Rippen 25 versehen ist, die der reibschlüssigen Halterung in der Aufnahme 30 der Basis 20 dienen.
   Auch offenbart ist
D) Anordnung mehrere Anschlussdosen 10 gemäß Oberbegriff des Anspruchs 1 übereinander, wobei ein Distanzstück 18 die Anschlussdosen 10voneinander beabstanden und das Distanzstück 18 einer ersten Anschlussdose 10 mit einem Kopf 21 in eine Aufnahme 30 einer Basis 20 des Distanzstücks 18 einer zweiten Anschlussdose 10 eingreift.
E) Anordnung gemäß D), dadurch gekennzeichnet, dass das Distanzstück 18 nach einem der Buchstaben A bis B ausgebildet ist.
F) Anordnung gemäß D), dadurch gekennzeichnet, dass die Anschlussdosen 10 gemäß einem der Ansprüche 1 bis 9 ausgebildet sind.
   und ferner gezeigt ist
G) Anschlussdose 10, insbesondere für ein Solarmodul, mit einem Gehäuse 11, dessen Innenraum 12 mit Funktionsbauteilen bestückt ist, dadurch gekennzeichnet, dass das Gehäuse 11 eine Zentrierausnehmung für den Eingriff eines Zentrierstempels aufweist.
H) Anschlussdose nach G), dadurch gekennzeichnet, dass die Zentrierausnehmung eine konische Vertiefung ist.
K) Anschlussdose nach G), dadurch gekennzeichnet, dass innerhalb der Zentrierausnehmung eine Wand mit einer Schrägfläche ausgebildet ist.

Offenbart wird weiterhin eine Anschlussdose, insbesondere für ein Solarmodul, mit einem Gehäuse, dessen Innenraum mit Funktionsbauteilen bestückt ist. Gattungsgemäße Anschlussdosen sind beispielsweise aus DE 10 2007 023 210 bekannt. Mit dem Übergang zur vollautomatischen Fertigung von Solarmodulen ist es erforderlich, Anschlussdosen bereitzustellen, die den Anforderungen eines vollautomatischen Produktionsprozesses gerecht werden.

Eine solche Anschlussdose kennzeichnet sich insbesondere dadurch, dass das Gehäuse eine Zentrierausnehmung für den Eingriff eines Zentrierstempels aufweist.

Der wesentliche Vorteil dieser Anschlussdose ist, dass eine Zentrierung der Anschlussdose zum Montagewerkzeug beim Aufnehmen der Anschlussdose durch den Greifer eines entsprechenden Montageroboters erfolgen kann.

Der weitere wesentliche Vorteil ist, dass eine Lageausrichtung der Anschlussdose im Anschluss an ihre Montage auf dem Solarmodul durch Eingriff von einem Zentrierstempel in die Zentrierausnehmung erfolgen kann.

So ist es möglich, im Anschluss an den eigentlichen Montagvorgang der Dose in einem zweiten Arbeitsschritt eine möglicherweise notwendige Nachjustierung der Anschlussdose relativ zum Solarmodul durchführen zu können.

Eine Ausführungsform sieht vor, dass die Zentrierausnehmung eine konische Vertiefung ist.

Alternativ ist vorgesehen, dass innerhalb der Zentrierausnehmung eine Wand mit einer Schrägfläche ausgebildet ist.

Beiden Ausführungsformen ist der Vorteil gemein, dass Schrägfläche bzw. konische Form der Zentrierausnehmung in Kooperation mit einem entsprechend ausgebildeten Zentrierstempel die Lageausrichtung der Anschlussdose relativ zum Solarmodul wesentlich vereinfachen.

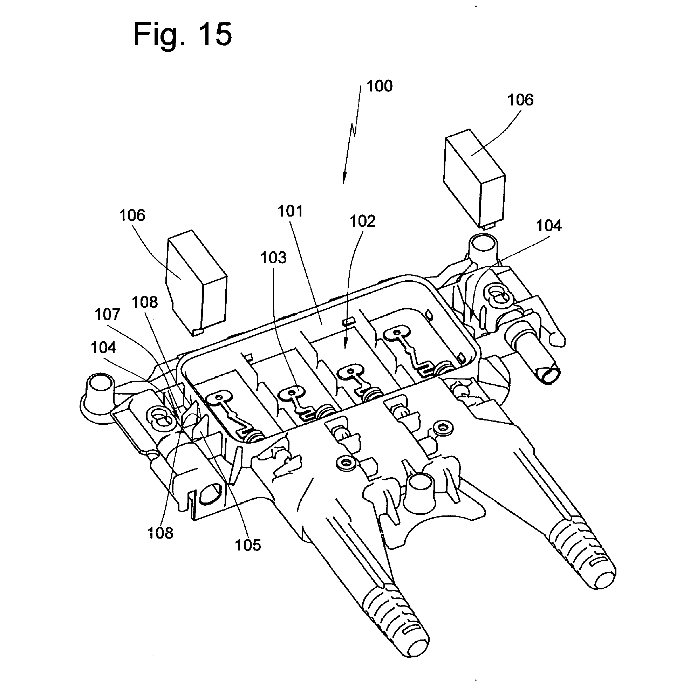

Die offenbarte Anschlussdose wird an Hand eines der in Figuren 15 bis 17 dargestellten Ausführungsbeispiels näher erläutert. Es zeigen:
- Fig. 15: die perspektivische Darstellung einer Anschlussdose unter schematischer Darstellung zweier Zentrierstempel,

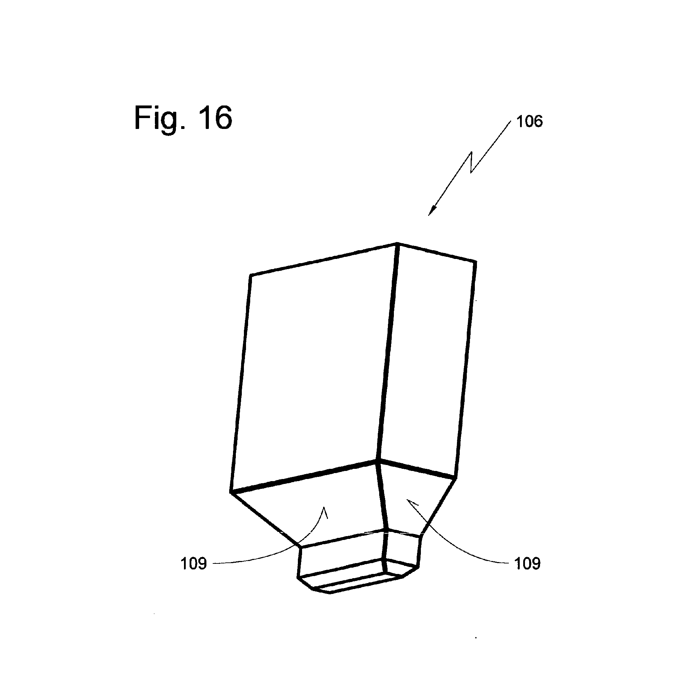

- Fig. 16: die schematische Darstellung eines Zentrierstempels in perspektivischer Ansicht,

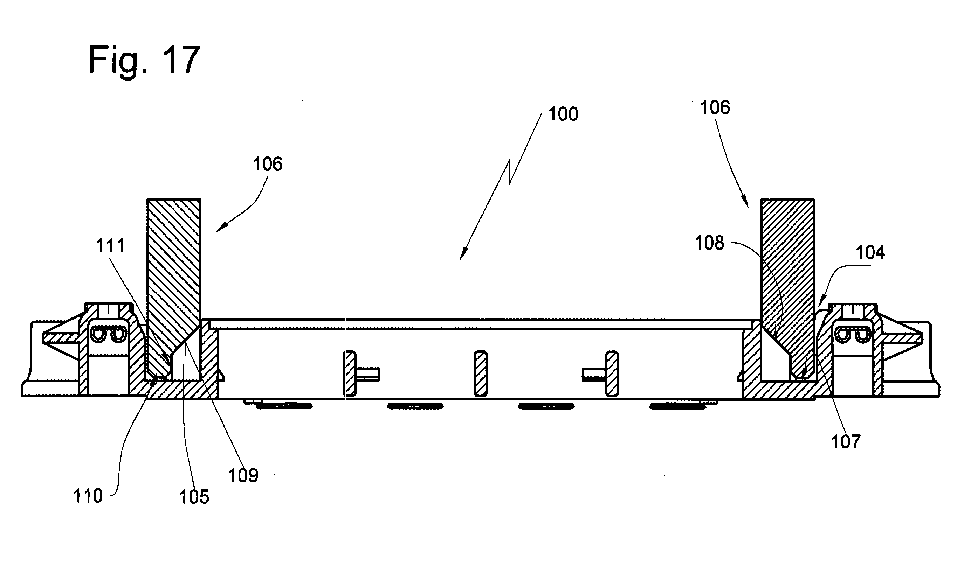

- Fig. 17: eine Darstellung eines Vertikalschnittes durch die Anschlussdose gemäß Fig. 15 mit eingesetzten Zentrierstempeln.

In den Figuren ist eine Anschlussdose insgesamt mit der Bezugsziffer 100 versehen.

Die Anschlussdose 100 wird von einem Gehäuse 101, welches einen Innenraum 102 umschließt. Innerhalb des Innenraumes sind Anschlusskontakte zur Verbindung mit solarmodulseitigen Leitern angeordnet, die hier nicht dargestellt sind. Der Innenraum 102 kann durch Vergießen oder durch Aufsetzen eines nicht dargestellten Deckels verschlossen werden.

Seitlich des Innenraumes 102 bildet das Gehäuse Zentrierausnehmungen 104 aus. Innerhalb der Zentrierausnehmungen sind mehrere Wände 105 eingezogen, welche mit zu Zentrierstempel 106 gerichteten und zum Boden 107 der Zentrierausnehmung 104 hin abfallenden Schrägflächen 108 versehen sind.

Figur 16 zeigt den bereits in Figur 15 schematisch dargestellten Zentrierstempel 106 in perspektivischer Ansicht von unten.

Der Zentrierstempel 106 ist an seinem zur Anschlussdose 100 gerichteten Ende mit zur Anschlussdose 100 hin konisch zulaufenden Zentrierflächen 109 versehen. Ein sich an die Zentrierflächen 109 anschließender, in etwa quaderförmiger Abschnitt 110 bildet ein Anschlagmittel für den Zentrierstempel 106 aus und ist gleichzeitig Abstandshalter für die Zentrierflächen 109 gegenüber dem Boden 107 der Zentrierausnehmung 104.

Zur Zentrierung der Anschlussdose 100 gegenüber einem Greifwerkzeug eines Montageautomaten oder zur Zentrierung der Anschlussdose 100 gegenüber einem nicht dargestellten Solarmodul fahren die Zentrierstempel 106 in die Zentrierausnehmungen 104 ein. Dabei gleitet zumindest ein quaderförmiger Abschnitt 110 auf den Schrägflächen 108 der Wände 105 entlang und verschiebt hierdurch die Anschlussdose 100 relativ zum Zentrierstempel und in Folge dessen auch relativ zum Solarmodul bzw. zum Greifer. Durch das Aufsitzen der Zentrierflächen 109 des Zentrierstempels 106 auf den Schrägflächen 108 wird eine Feinzentrierung der Anschlussdose 100 vorgenommen. Die quaderförmigen Abschnitte 110 treffen auf dem Boden 107 der Zentrierausnehmung 104 auf und dienen so als Bewegungsendanschlag. Sie schützen die Wände 105 so vor einer eventuellen Verformung durch weiteres Einfahren der Zentrierstempel 106 und bewahren so die Anschlussdose 100 vor Beschädigung.

Hierzu gehen die Schrägfläche 109 in senkrecht zum Boden 107 abfallende Wandabschnitte 11 über.

Zusammenfassend wurde eine Anschlussdose 100 offenbart, welche durch Ausbildung von Zentrierausnehmungen eine vorteilhafte Möglichkeit zur Lageanpassung der Anchlussdose 100 gegenüber einem Greifer eines Montageautomaten bzw. gegenüber dem Solarmodul gestatten.

### Bezugszeichenliste:

- 10: Anschlussdose
- 11: Gehäuse
- 12: Innenraum
- 13: Anschlusskontakt
- 14: Anschlussleitung
- 15: Steckverbinder
- 16: Mimiken
- 17: Halterung
- 18: Distanzstück
- 19: Körper von 18
- 20: Basis
- 21: Kopf
- 22: Abstandsstück
- 23: Bodenscheibe
- 24: Stufe
- 25: Rippen
- 26: Absatz
- 27: Führungsabschnitt von 21
- 28: konische Umfangsfläche von 27
- 29: Stabilisierungswand
- 30: Aufnahme von 20
- 31: Innenumfangsfläche von 18
- 32: Wandfläche von 29
- 33: Längsbohrung von 21
- 34: Anschlagfläche
- 35: sternförmige Nut
- 36: quadratische Nut
- 37: Bohrung größeren Durchmessers
- 38: Ringfläche von 17
- 39: hohlzylindrischer Abschnitt
- 40: Hohlraum von 39
- 41: Innenoberfläche von 39
- 42: Passungsspiel
- 43: Innenoberfläche von 30

### Bezugszeichen zu den Figuren 15 bis 17

- 100: Anschlussdose
- 101: Gehäuse
- 102: Innenraum
- 103: Anschlusskontakte
- 104: Zentrierausnehmung
- 105: Wände
- 106: Zentrierstempel
- 107: Boden von 104
- 108: Schrägflächen von 105
- 109: Zentrierfläche von 106
- 110: quaderförmiger Abschnitt
- 111: senkkrecht abfallende Wandabschnitte von 105

## Patentansprüche

1. Anschlussdose (10), insbesondere für eine Solarmodul, mit einem Gehäuse (11), innerhalb dessen Funktionsbauteile zum Anschluss an solarmodulseitige Anschlusskontakte angeordnet sind, **dadurch gekennzeichnet, dass** das Gehäuse (11) der Anschlussdose (10) ein Distanzstück (18) trägt, vermittels dessen eine weitere Anschlussdose (10) mit Abstand zur das Distanzstück (18) tragenden Anschlussdose (10) anordenbar und lagestabil festlegbar ist.

2. Anschlussdose nach Anspruch 1, **dadurch gekennzeichnet, dass** die Anschlussdose (10) drei Distanzstücke (18) trägt, die die Eckpunkte eines Dreiecks bilden.

3. Anschlussdose nach Anspruch 1 oder 2, **dadurch gekennzeichnet, dass** das Distanzstück (18) an einander gegenüberliegenden Enden einen Kopf (21) und eine Basis (20) bildet, wobei die Basis (20) eine Aufnahme (30) zur Anordnung des Kopfes (21) eines weiteren, zumindest hinsichtlich seines Kopfes (21) aufnahmekomplementär ausgebildeten Distanzstücks (18) aufweist.

4. Anschlussdose einem der Ansprüche 1 bis 3, **dadurch gekennzeichnet, dass** das Distanzstück (18) lösbar in einer Halterungen (17) der Anschlussdose (10) gehalten ist.

5. Anschlussdose nach Anspruch 4, **dadurch gekennzeichnet, dass** das Distanzstück (18) reibschlüssig in der Halterung (17) angeordnet ist.

6. Anschlussdose nach Anspruch 5, **dadurch gekennzeichnet, dass** die Halterung (17) der Anschlussdose (10) oder die Basis (20) des Distanzstücks (18) mit Rippen (25) versehen sind, die den Reibschluss zwischen Halterung (17) und Distanzstück (18) herstellen.

7. Anschlussdose nach Anspruch 3, **dadurch gekennzeichnet, dass** der Kopf (21) des weiteren Distanzstücks (18) reibschlüssig in der Aufnahme (30) der Basis (20) gehalten ist.

8. Anschlussdose nach Anspruch 7, **dadurch gekennzeichnet, dass** Kopf (21) oder Aufnahme (30) mit Rippen (25) zur Herstellung des Reibschlusses versehen sind.

9. Anschlussdose nach Anspruch 6 oder 8, **dadurch gekennzeichnet, dass** die Anzahl der Rippen (25) der Aufnahme (30) des Distanzstücks (18) bzw. des Kopfes (21) des Distanzstücks (18) geringer ist als die Anzahl der Rippen (25) der Halterung (17) der Anschlussdose (10) bzw. der Basis (20) des Distanzstücks (18).
